# EUROPÄISCHE PATENTSCHRIFT

(11) **EP 0 769 679 B1**
(45) Veröffentlichungstag und Bekanntmachung des Hinweises auf die Patenterteilung: **06.03.2002**
(21) Anmeldenummer: 96250236.5
(22) Anmeldetag: 18.10.1996
(51) Int. Cl.: G01D 9/28

(54) **Einbau-Mehrkanalschreiber**
Mountable multi-channel writer
Enregistreur multi-canaux à encastrer

(30) Priorität: 18.10.1995 DE 19540218
(43) Veröffentlichungstag der Anmeldung: 23.04.1997
(73) Patentinhaber: ABB PATENT GmbH, 68309 Mannheim (DE)
(72) Erfinder: Bruhn, Arno, 30655 Hannover (DE); Kirste, Hans-Herbert, 31628 Landesbergen (DE)
(74) Vertreter: Presting, Hans-Joachim, Dipl.-Ing.

(56) Entgegenhaltungen:
- DE-A- 2 436 271

## Beschreibung

Die Erfindung betrifft einen Einbau-Mehrkanalschreiber, der in rasterorganisierte Schalttafeln oder -pulte eingebaut wird.

Derartige Einbau-Mehrkanalschreiber sind beispielsweise aus dem Listenblatt 40-1.10 der Hartmann & Braun AG als Punktschreiber Arucomp EK-Ex.A bekannt.

Basierend auf einem Teilungsgrundmaß von 12 mm hat sich in der Vergangenheit als sinnvolles Kleinstformat für derartige Einbauschreiber eine jeweils 12 Rasterteilung in Höhe und Breite umfassende Frontfläche von 144 mm * 144 mm durchgesetzt. Größere Einbauschreiber weisen eine Frontfläche auf, die ein ganzzahliges Vielfaches des Kleinstformates üblicherweise in der Breite haben.

Unmittelbar benachbarte Rasterplätze derartiger Einbauschreiber sind regelmäßig mit anderen Baugruppen oder Geräten bestückt, so daß zum Anschluß von Leitungen zur Stromversorgung und Meßwertzuführung ausschließlich die zur Frontfläche im wesentlichen flächengleiche Rückfläche nutzbar ist.

Bei zunehmender Komplexität der Meßwertaufbereitung und -verarbeitung in einem derartigen Einbauschreiber und insbesondere in explosionsgefährdeter Umgebung, bei der Anschlußelemente für Zuführungsleitungen eine vorgegebene Mindestgröße zur Realisierung vorgeschriebener Luft- und Kriechstrecken aufweisen, gelingt es nicht mehr, alle erforderlichen Anschlußelemente auf der zur Verfügung stehenden Rückfläche eines Einbauschreibers im Kleinstformat zu plazieren. Damit bleibt die Anzahl der zuführbaren Signale hinter den Verarbeitungsmöglichkeiten derartiger Einbauschreiber zurück.

Eine angepaßte Vergrößerung der Rückfläche des Einbauschreibers ist aus Kompatibilitätsgründen ausgeschlossen, da insbesondere bei Ersatzbestückung eines vorhandenen Einbauschreibers durch einen neuen Einbauschreiber mit erweiterten Ausstattungsmerkmalen nur der vorhandene Ausschnitt in der Schalttafel oder dem Pult zur Verfügung steht.

In der DE 24 36 271 ist ein Kompensations-Messgerät mit mehreren Gerät-Messstellen für den Anschluss von diversen Messwert-Gebern beschrieben, das aus einem Messgerät und einem mit diesem Messgerät verbundenen Anschlusskasten besteht. Der Anschlusskasten weist Kreuzschienenveneiler auf, mit denen die Zuordnung von Messwertgebem zu einer der Gerät-Messstellen, die Messbereichswahl und die Zuordnung einer Vergleichsstelle vorgenommen wird. Dabei ist die gesamte Parametrierung der aus dem Messgerät in den Anschlusskasten verlagert.

Der Erfindung liegt daher die Aufgabe zugrunde, einen derartigen Einbauschreiber dahingehend weiterzuentwickeln, daß trotz der begrenzten Rückfläche eine möglichst beliebig große Anzahl von Anschlußelementen für auf separaten Leitungen zugeführten Signale zur Verfügung stehen.

Erfindungsgemäß wird diese Aufgabe mit den Mitteln des Patentanspruchs 1 gelöst. Vorteilhafte Ausgestaltungen der Erfindung sind in den Ansprüchen 2 bis 6 beschrieben.

Die Erfindung wird nachstehend anhand von Ausführungsbeispielen näher erläutert. In der Zeichnung zeigt:
Figur 1 ein Blockschaltbild eines Schreibers
Figur 2 ein Kommunikationsschema für einen Schreiber

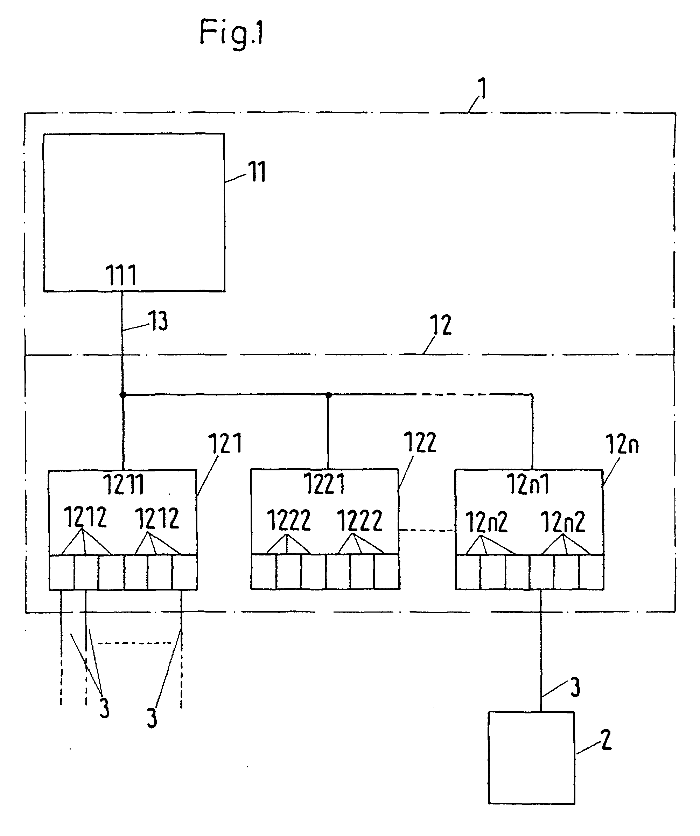

In Figur 1 ist ein Blockschaltbild eines Einbau-Mehrkanalschreibers 1, im weiteren als Schreiber 1 bezeichnet, dargestellt, der Mittel 11 zur Aufzeichnung von Zeitverläufen von Meßwerten und Mittel 12 zum lösbaren Anschalten von Signalanschlußleitungen 3 für Meßwertquellen aufweist. Die Mittel 11 zur Aufzeichnung von Zeitverläufen von Meßwerten umfassen dabei alle für sich bekannten und im Rahmen dieser Beschreibung nicht näher spezifizierten Einrichtungen zum Vorhalten, Transportieren und Ablegen eines Aufzeichnungsträgers, zum Umsetzen von elektrischen Meßwertsignalen in äquivalenten Positionsbewegungen von zugeordneten Aufzeichnungselementen quer zur Transportrichtung des Aufzeichnungsträgers, sowie die Ausprägung der Aufzeichnungselemente zur Aufzeichnung von den Meßwertsignalen äquivalenten Aufzeichnungsinformationen auf den Aufzeichnungsträger, und zum parametrierbaren Be- und Verarbeiten von Meßwertsignalen einschließlich soweit vorgesehen, einer meßwertbezogenen Grenzwertüberwachung und Signalisierung.

Die Mittel 12 zum lösbaren Anschalten von Signalanschlußleitungen 3 umfassen die Gesamtheit der physischen Elemente zur elektrischen Kontaktierung von separaten Signalanschlußleitungen 3 zur Übertragung von Meßwertsignalen zwischen nicht dargestellten Meßwertquellen und dem Schreiber 1, wie Klemmenanordnungen, Steckkontakteinrichtungen, Wickel- undloder Lötanschlüsse. Darüber hinaus können die Mittel 12 zum lösbaren Anschalten von separaten Signalanschlußleitungen zum gehenden Übertragen von Meldesignalen vom Schreiber 1 zu einer nicht dargestellten Meldesignalempfangseinrichtung vorgesehen sein.

Gemäß dem Gegenstand der Erfindung ist vorgesehen, daß die Mittel 11 zur Aufzeichnung von Zeitverläufen von Meßwerten und die Mittel 12 zum lösbaren Anschalten von Signalanschlußleitungen 3 räumlich getrennt und über Verbindungsleitungen 13 elektrisch miteinander verbunden sind.

Die Mittel 12 zum lösbaren Anschalten von Signalanschlußleitungen 3 sind in mindestens einem Konzentrator 121 bis 12n zusammengefaßt, wobei jeder Konzentrator 121 bis 12n eine Mehrzahl von Anschlußelementen 1212 bis 12n2 zum lösbaren Anschluß von Signalanschlußleitungen 3 aufweist.

Vorteilhafterweise sind dadurch die Mittel 12 zum lösbaren Anschalten von Signalanschlußleitungen 3 weitgehend frei positionierbar und hinsichtlich ihrer physischen Dimensionierung von durch Schalttafeldurchbrüchen vorgegebenen Raumbeschränkungen unabhängig, so daß insbesondere bei Einbau-Mehrkanalschreibem im Kleinstformat mehr Signalanschlußleitungen 3 anschließbar sind, als Anschlußelemente 1212 bis 12n2 auf der Rückfläche eines bekannten Schreibers anordenbar sind.

Darüber hinaus ist ein derartig aufgebauter Schreiber 1 ohne Eingriff in die physische Anordnung der Mittel 11 zur Aufzeichnung von Zeitverläufen von Meßwerten modular konfigurierbar, indem den Mitteln 12 zum lösbaren Anschluß von Signalanschlußleitungen 3 weitere Konzentratoren 122 bis 12n hinzugefügt werden.

In weiterer Ausgestaltung der Erfindung ist vorgesehen, daß die Mittel 12 zum lösbaren Anschalten von Signalanschlußleitungen 3 und die Mittel 11 zum Aufzeichnen von Zeitverläufen von Meßwerten jeweils mit mindestens einem mehrpoligen Sammelanschluß 111, 1211 bis 12n1 ausgestattet sind. Vorzugsweise sind diese Sammelanschlüsse 119, 1211 bis 12n1 als lösbare Anschlüsse ausgeführt. Vorteilhafterweise sind dabei die Mittel 11 zum Aufzeichnen und die Mittel 12 zum lösbaren Anschalten von Signalanschlußleitungen 3 unabhängig voneinander montierbar und im montierten Zustand elektrisch miteinander verbindbar.

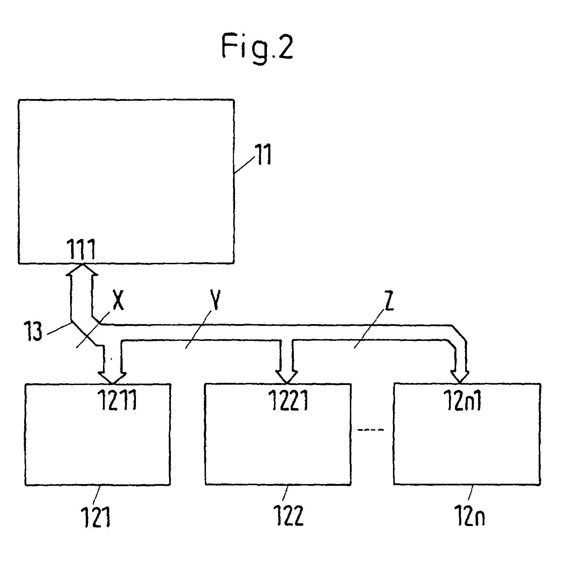

In einer Ausführungsform der Erfindung ist vorgesehen, der der mehrpolige Sammelanschluß 111 der Mittel 11 zur Aufzeichnung von Zeitverläufen von Meßwerten als Raumvielfach der an jedem Konzentrator 121 bis 12n angeschlossenen Signalanschlußleitungen 3 ausgeführt ist. Dazu ist in Figur 2 unter Verwendung gleicher Bezugszeichen für gleiche Mittel ein Kommunikationsschema für einen derartigen Schreiber dargestellt. Die Mittel 11 zur Aufzeichnung von Zeitverläufen von Meßwerten sind über m Verbindungsleitungen 13, die an den Sammelanschluß 111 angeschlossen sind, mit den Konzentratoren 121 bis 12n verbunden. Zwischen dem ersten Konzentrator 121 und dem zweiten Konzentrator 122 ist der Strang der Verbindungsleitungen n-adrig und zwischen dem zweiten Konzentrator 122 und dem folgenden Konzentrator 12n ist der Strang als Verbindungsleitung 13 p-adrig.

Bei im Raumvielfach angeschalteten Konzentratoren 121 bis 12n ist x>y>z, wobei an den Sammelanschluß 1211 des ersten Konzentrators 121 x-y Verbindungsleitungen 13 und an den Sammelanschluß 1221 des zweiten Konzentrators 122 y-z Verbindungsleitungen 13 angeschlossen sind. Bei n=3 Konzentratoren 121 bis 12n sind am Sammelanschluß 12n1 z Verbindungsleitungen 13 angeschlossen. Vorteilhafterweise sind die einzelnen Konzentratoren 121 bis 12n logisch voneinander unabhängig. In einer anderen Ausführungsform der Erfindung ist vorgesehen, daß der mehrpolige Sammelanschluß 111 der Mittel 11 zur Aufzeichnung von Zeitverläufen von Meßwerten als Zeitvielfach ausgeführt. Dabei ist bezugnehmend auf Figur 2 x=y=z, das heißt der Strang, der an dem Sammelanschluß 111 der Mittel 11 zur Aufzeichnung von Zeitverläufen von Meßwerten angeschlossenen Verbindungsleitungen 13 ist in vollem Umfang an jeden Sammelanschluß 1211 bis 12n1 jedes Konzentrators 121 bis 12n angeschlossen. Dabei sind die Verbindungsleitungen 13 zeitgeteilt aufeinanderfolgend zur Verbindung der Mittel 11 zur Aufzeichnung von Zeitverläufen von Meßwerten mit jedem Mittel 12, 121 bis 12n zum lösbaren Anschalten von Signalanschlußleitungen 3 vorgesehen.

Vorteilhafterweise genügen dabei bereits wenige parallele Verbindungsleitungen 13 zum Anschluß beliebig vieler Konzentratoren 121 bis 12n. Weiterhin ist ein so ausgeführter Schreiber 1 jederzeit ohne Eingriff in die Struktur der Verbindungsleitungen 13 modular um weitere Konzentratoren ergänzbar.

Weiterhin ist vorgesehen, daß eine externe Parametriereinrichtung 2 an mindestens einem der Konzentratoren 121 bis 12n anschließbar ist. Vorteilhafterweise ist somit ohne eingriff in den Schreiber 1 eine variable, den aktuellen Erfordernissen entsprechende Zuordnung der Meßwertquellen zu den verschiedenen Aufzeichnungskanälen realisierbar.

Darüber hinaus kann vorgesehen sein, daß die Konzentratoren 121 bis 12n neben Anschlußelementen 1212 bis 12n2 für Signalanschlußleitungen 3 für Meßwerte, die logisch als Eingänge konfiguriert sind, auch solche für Meldesignale, die logisch als Ausgänge konfiguriert sind, an hierarchisch übergeordnete Einrichtung aufweisen. Zweckmäßigerweise sind dabei die Konzentratoren 121 bis 12n hinsichtlich ihrer ein/Ausgabecharakteristik unifiziert. Vorteilhafterweise sind somit preiswerte modulare Konfigurationsvarianten eines derartigen Schreibers 1 realisierbar.

### Bezugszeichenliste

- 1: Schreiber
- 11: Mittel zur Aufzeichnung von Zeitverläufen
- 111: Sammetanschluß
- 12: Mittel zum Anschalten von Signalanschlußleitungen
- 121 bis 12n: Konzentrator
- 1211 bis 12n1: Sammelanschluß
- 1212 bis 12n2: Anschlußelemente
- 13: Verbindungsleitung
- 2: Parametriereinrichtung
- 3: Signalanschlußleitung

## Patentansprüche

1. Einbau-Mehrkanalschreiber zum Einbau in rasterorganisierte Schalttafeln oder -pulte mit Mitteln zur Aufzeichnung von Zeitverläufen von Meßwerten, die Einrichtungen zum Vorhalten, Transportieren und Ablegen eines Aufzeichnungsträgers, zum Umsetzen von elektrischen Meßwertsignalen in äquivalenten Positionsbewegungen von zugeordneten Aufzeichnungselementen quer zur Transportrichtung des Aufzeichnungsträgers, sowie die Ausprägung der Aufzeichnungselemente zur Aufzeichnung von den Meßwertsignalen äquivalenten Aufzeichnungsinformationen auf den Aufzeichnungsträger, und zum parametrierbaren Be- und Verarbeiten von Meßwertsignalen einschließlich einer meßwertbezogenen Grenzwertüberwachung und Signalisierung umfassen, und Mitteln zum lösbaren Anschalten von Signalanschlußleitungen für Meßwertquellen,
**dadurch gekennzeichnet,**
**daß** die Mittel (12) zum lösbaren Anschalten von Signalanschlußleitungen (3) für Meßwertquellen von den Mitteln (11) zur Aufzeichnung von Zeitverläufen von Meßwerten räumlich getrennt und im Raum- oder Zeitvielfach über Verbindungsleitungen (13) elektrisch miteinander verbunden sind.

2. Einbau-Mehrkanalschreiber nach Anspruch 1
**dadurch gekennzeichnet,**
**daß** die Mittel (12) zum lösbaren Anschalten von Signalanschlußleitungen (3) für Meßwertquellen in mindestens einem räumlich beliebig positionierbaren Konzentrator (121 bis 12n) zusammengefaßt sind, wobei jeder Konzentrator (121 bis 12n) eine Mehrzahl von Anschlußelementen (1212 bis 12n2) zum lösbaren Anschluß von Signalanschlußleitungen (3) für Meßwertquellen aufweist.

3. Einbau-Mehrkanalschreiber nach einem der Ansprüche 1 und 2
**dadurch gekennzeichnet,**
**daß** die Mittel (12) zum lösbaren Anschalten von Signalanschlußleitungen (3) für Meßwertquellen und die Mittel (11) zur Aufzeichnung von Zeitverläufen von Meßwerten jeweils mit mindestens einem mehrpoligen Sammelanschluß (111, 1211 bis 12n1) ausgestattet sind.

4. Einbau-Mehrkanalschreiber nach einem der Ansprüche 1 bis 3
**dadurch gekennzeichnet,**
**daß** der mehrpolige Sammelanschluß (111) der Mittel (11) zur Aufzeichnung von Zeitverläufen von Meßwerten als Raumvielfach der an jeden Konzentrator (121 bis 12n) angeschlossenen Signalanschlußleitungen (3) ausgeführt ist.

5. Einbau-Mehrkanalschreiber nach einem der Ansprüche 1 bis 3
**dadurch gekennzeichnet,**
**daß** der mehrpolige Sammelanschluß (111) der Mittel (11) zur Aufzeichnung von Zeitverläufen von Meßwerten als Zeitvielfach ausgeführt ist, wobei die Verbindungsleitungen (13) zeitgeteilt aufeinanderfolgend mit beliebigen Mitteln (12, 121 bis 12n) zum lösbaren Anschalten von Signalanschlußleitungen (3) verbindbar sind.

6. Einbau-Mehrkanalschreiber nach einem der Ansprüche 1 bis 5
**dadurch gekennzeichnet,**
**daß** die Zuordnung der Meßwertquellen zu den Aufzeichnungskanälen der Mittel (11) zur Aufzeichnung von Zeitverläufen von Meßwerten über eine an einen Konzentrator (121 bis 12n) anschließbare Parametriereinrichtung (2) einstellbar ist.

## Claims

1. A built-in multi-channel pen recorder for installation in grid-organised control panels or consoles and incorporating means for recording the variation of measured values over time, wherein said means comprises the devices for storing, transporting and loading a recording medium, for converting electrical test signals into the equivalent positioning movements of the associated recording elements transverse to the direction of transportation of the recording medium and also for stamping the recording elements for the purposes of recording the record information equivalent to the test signals on the recording medium, for working and processing the test signals in parametric manner including systems for signalling and monitoring limiting values related to the measured values, and means for the releasable connection of the signal supply lines for the sources of the measured values,
**characterised in that**
the means (12) for the releasable connection of the signal supply lines (3) for the sources of the measured values are spatially separated from the means (11) for recording the variation of the measured values over time and said means are electrically interconnected in space or time division multiplex manner via connecting lines (13).

2. A built-in multi-channel pen recorder in accordance with Claim 1,
**characterised in that**
the means (12) for the releasable connection of the signal supply lines (3) for the sources of the measured values are combined in at least one arbitrarily spatially-positionable concentrator (121 to 12n), wherein each concentrator (121 to 12n) comprises a plurality of terminating elements (1212 to 12n2) for the releasable connection of the signal supply lines (3) for the sources of the measured values.

3. A built-in multi-channel pen recorder in accordance with Claim 1 and 2,
**characterised in that**
the means (12) for the releasable connection of the signal supply lines (3) for the sources of the measured values and the means (11) for recording the variation of the measured values over time are each equipped with at least one multi-pole group termination (111, 1211 to 12n1).

4. A built-in multi-channel pen recorder in accordance with any of Claims 1 to 3,
**characterised in that**
the multi-pole group termination (111, 1211 to 12n1) of the means (11) for recording the variation of the measured values over time is in the form of a space division multiplex system for the signal supply lines (3) connected to each concentrator (121 to 12n).

5. A built-in multi-channel pen recorder in accordance with any of the Claims 1 to 3,
**characterised in that**
the multi-pole group termination (111) of the means (11) for recording the variation of the measured values over time is in the form of a time division multiplex system wherein the connecting lines (13) are successively connectible in time divided manner to arbitrary ones of the means (12, 121 to 12n) for the releasable connection of the signal supply lines (3).

6. A built-in multi-channel pen recorder in accordance with any of the Claims 1 to 5,
**characterised in that**
the association of the sources of the measured values with the recording channels of the means (11) for recording the variation of the measured values over time is adapted to be set by means of a parameterizing device (2) which is connectible to a concentrator (121 to 12n).

## Revendications

1. Enregistreur multi-canaux à incorporer dans des pupitres ou tableaux de commutation organisés en grille, comportant des moyens pour l'enregistrement de courbes de valeurs de mesure, qui comportent des dispositifs pour maintenir, transporter et déposer un support d'enregistrement, pour transformer des signaux électriques de valeurs de mesure en déplacements équivalents d'éléments d'enregistrement associés transversalement à la direction de transport du support d'enregistrement, ainsi que l'empreinte des éléments d'enregistrement pour l'enregistrement d'informations d'enregistrement équivalentes aux signaux de valeurs de mesure sur le support d'enregistrement, et pour le traitement paramétrable de signaux de valeurs de mesure y compris une signalisation et une surveillance de valeurs limites liées aux valeurs de mesure, et des moyens pour monter de façon amovible des liaisons de raccordement de signaux pour des sources de valeurs de mesure,
**caractérisé en ce que** les moyens (12) pour monter de façon amovible des liaisons de raccordement de signaux (3) pour des sources de valeurs de mesure sont séparés spatialement des moyens (11) pour l'enregistrement de courbes de valeurs de mesure et sont reliés ensemble électriquement de façon multiple dans le temps ou dans l'espace par l'intermédiaire de liaisons (13).

2. Enregistreur multi-canaux selon la revendication 1,
**caractérisé en ce que** les moyens (12) pour monter de façon amovible des liaisons de raccordement de signaux (3) pour des sources de valeurs de mesure sont rassemblés dans au moins un concentrateur (121 à 12n) pouvant être positionné spatialement de façon quelconque, chaque concentrateur (121 à 12n) présentant une pluralité d'éléments de raccordement (1212 à 12n2) pour le raccordement amovible de liaisons de raccordement de signaux (3) pour des sources de valeurs de mesure.

3. Enregistreur multi-canaux selon une des revendications 1 et 2, **caractérisé en ce que** les moyens (12) pour monter de façon amovible des liaisons de raccordement de signaux (3) pour des sources de valeurs de mesure et les moyens (11) pour l'enregistrement de courbes de valeurs de mesure sont munis, à chaque fois, d'au moins un raccord de collecte multipolaire (111, 1211 à 12n1).

4. Enregistreur multi-canaux selon une des revendications 1 à 3, **caractérisé en ce que** le raccord de collecte multipolaire (111) des moyens (11) pour l'enregistrement de courbes de valeurs de mesure est réalisé comme multiplicité spatiale des liaisons de raccordement de signaux (3) raccordées à chaque concentrateur (121 à 12n).

5. Enregistreur multi-canaux selon une des revendications 1 à 3, **caractérisé en ce que** le raccord de collecte multipolaire (111) des moyens (11) pour l'enregistrement de courbes de valeurs de mesure est réalisé comme multiplicité temporelle, les liaisons (13) pouvant être reliées successivement dans le temps à des moyens quelconques (12, 121 à 12n) pour monter de façon amovible des liaisons de raccordement de signaux (3).

6. Enregistreur multi-canaux selon une des revendications 1 à 5, **caractérisé en ce que** l'association des sources de valeurs de mesure aux canaux d'enregistrement des moyens (11) pour l'enregistrement de courbes de valeurs de mesure peut être réglée par l'intermédiaire d'un dispositif de paramétrage (2) pouvant être raccordé à un concentrateur (121 à 12n).
